# EUROPEAN PATENT APPLICATION

(11) **EP 1 531 253 A2**
(43) Date of publication of application: **18.05.2005**
(21) Application number: 04024304.0
(22) Date of filing: 12.10.2004
(51) Int. Cl.: F02D 41/40, F02D 41/38

(54) **Internal combustion engine control dependent on engine noise**

(30) Priority: 17.11.2003 JP 2003386184
(71) Applicant: TOYOTA JIDOSHA KABUSHIKI KAISHA, Toyota-shi, Aichi-ken 471-8571 (JP)
(72) Inventor: Hiyoshi, Tsutomu, Toyota-shi Aichi-ken 471-8571 (JP)
(74) Representative: Kuhnen, Rainer Andreas, Dipl.-Ing.

(57) **Abstract**

An index for a sound pressure distribution to be realized in an internal combustion engine (10) is prepared with an engine revolution speed and an engine load defined as variables. A control parameter (qpl2, aintpl1, pcr, Int.A, Int.B) for the internal combustion engine (10) is adjusted relative to a combination of the engine revolution speed (NE) and the engine load so as to realize the sound pressure distribution in line with the index. Results of the adjustment are incorporated in the control of the internal combustion engine (10).

## Description

### Background of the Invention

### Field of the Invention

The present invention relates to an adjusting method for an internal combustion engine, and an internal combustion engine. More specifically, the present invention relates to an adjusting method preferable as a technique for adjusting the specific control of a diesel engine, and an internal combustion engine adjusted by the adjusting method.

### Background Art

Attempts have conventionally been made to reduce noise in a diesel engine by controlling fuel injection procedures as disclosed, for example, in Japanese Patent Laid-open No. 8-334049. This publication, more specifically, discloses a diesel engine, in which the following specific approaches are taken for reducing noise. When the maximum combustion pressure in a cylinder becomes excessively high to make a combustion vibration inordinately great, a fuel injection timing is retarded. If there is an extremely rapid rise of combustion, on the other hand, to make combustion noise excessively large, a fuel injection rate is reduced. Through these control approaches, the diesel engine can be prevented from making an inordinately large noise. Quietness of the engine can thus be enhanced.

Quietness a user of the internal combustion engine senses is not necessarily determined only by an absolute value representing a sound pressure level of the noise. Assuming the case of mild acceleration, for instance, if the sound pressure increases only mildly as a vehicle is accelerated, the user does not feel that the noise is uncomfortable even if the final sound pressure level is high. If, on the other hand, the sound pressure follows a disorderly pattern of increase and decrease with varying operating conditions of the internal combustion engine, the user tends to feel that the noise is uncomfortable even though the absolute sound pressure value is not very high.

Including the aforementioned publication, there is in the conventional control methods a problem in that no considerations are given to an arrangement for increasing or decreasing naturally the noise produced by the internal combustion engine with varying operating conditions of the internal combustion engine. Noise produced by the internal combustion engine does not, therefore, necessarily exhibit a natural increase and decrease relative to changes in behavior thereof.

### Summary of the Invention

In view of the foregoing problem in the conventional art, it is a first object of the present invention to provide a adjusting method for an internal combustion engine such that a sound pressure of noise produced by the internal combustion engine exhibits a desired pattern of increase and decrease relative to changes in operating conditions of the engine.

It is a second object of the present invention to provide an internal combustion engine that increases and decreases the sound pressure of noise in a desired form relative to changes in the operating conditions.

The first object of the present invention is achieved by an adjusting method for an internal combustion engine including the steps of: preparing an index for a sound pressure distribution to be realized in the internal combustion engine with an engine revolution speed and an engine load used as variables; adjusting a control parameter of the internal combustion engine with respect to a combination of the engine revolution speed and the engine load so as to realize the sound pressure distribution in line with the index; and installing a result of the adjusting step into control of the internal combustion engine.

The second object of the present invention is achieved by an internal combustion engine including revolution speed detecting means for detecting an engine revolution speed; load detecting means for detecting an engine load; and parameter control means for controlling a control parameter having an influence on a magnitude of noise produced by the internal combustion engine based on the engine revolution speed and the engine load; wherein the parameter control means controls the control parameter so that a sound pressure distribution may be formed such that constant-sound-pressure lines are arranged regularly on Cartesian coordinates having the engine revolution speed and the engine load defined as variables.

### Brief Description of the Drawings

FIG. 1 is a diagram showing the construction of a diesel engine used in a first embodiment of the present invention;
FIG. 2 is a diagram showing a typical index of the sound pressure distribution used for an adjustment in the first embodiment of the present invention;
FIGS. 3A and 3B show waveforms for explaining specific details of a multi-pilot injection executed by the diesel engine of the first embodiment of the present invention;
FIGS. 4A to 4C are diagrams showing relations between values of control parameters to be set in conjunction with the execution of the multi-pilot injection and the combustion noise;
FIGS. 5A and 5B are diagrams for explaining advantageous result achieved by an adjustment executed in the first embodiment of the present invention; and
FIG. 6 shows another example of an index of sound pressure distribution that can be used for an adjustment in the first embodiment of the present invention.

### Best Mode of Carrying Out the Invention

### First Embodiment

### [Construction of a first embodiment]

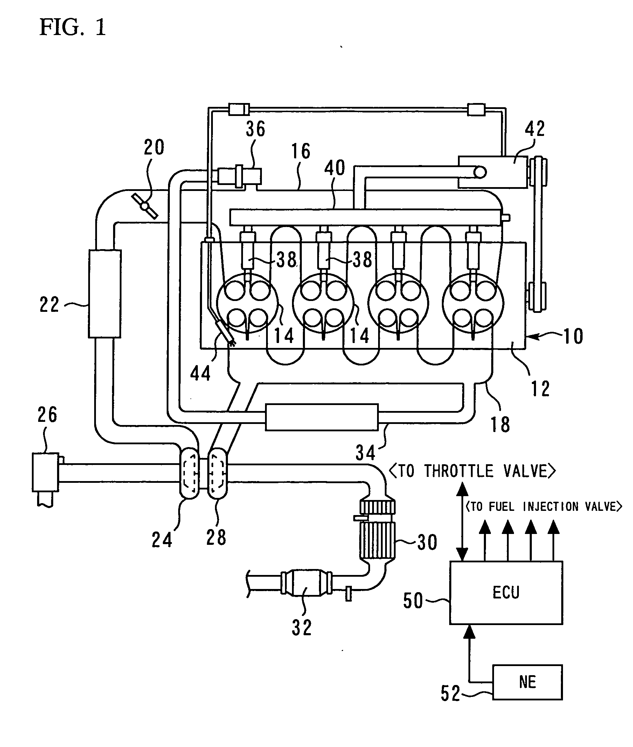

FIG. 1 is a diagram showing the construction of a diesel engine used in a first embodiment of the present invention. A diesel engine 10 includes a cylinder block 12. For the sake of explanation of an internal construction of the diesel engine 10, FIG. 1 shows a cylinder block 12 in perspective.

The diesel engine 10 includes a plurality of cylinders 14. An intake path 16 communicates with each of these cylinders 14 through an intake port. Further, an exhaust path 18 communicates with each of the cylinders 14 through an exhaust port. An electronic control throttle valve 20, an intercooler 22, a turbo charger compressor 24, an air filter 26, and the like are disposed in the intake path 16. On the other hand, as well as a turbo charger turbine 28, a NOx catalyst 30 and an oxidation catalyst 32 for purifying exhaust emissions and the like are disposed in the exhaust path 18. An EGR path 34, an EGR valve 36, and the like for enabling exhaust gas recirculation (EGR) are provided between the intake path 16 and the exhaust path 18.

Each of the cylinders 14 of the diesel engine 10 includes a fuel injection valve 38 for injecting fuel thereinto. A supply pump 42 communicates with the fuel injection valve 38 via a common rail 40. The supply pump 42 is operative to boost a pressure of fuel supplied from a fuel tank not shown to a required fuel pressure and supply the fuel injection valve 38 with the fuel having the required fuel pressure. The fuel injection valve 38 includes an electromagnetic solenoid provided therein. That is, the fuel injection valve 38 is a valve mechanism that opens appropriately to inject fuel under a high pressure into the cylinder. The supply pump 42 also communicates with a fuel-adding valve 44, which is for adding a fuel component to the exhaust path 18. The fuel-adding valve 44 allows fuel to be added as a reducing agent to the exhaust gas when required.

The system according to the first embodiment includes an ECU (Electronic Control Unit) 50. Sensors of various types, including a revolution speed sensor 52 for detecting an engine revolution speed NE, provide the ECU 50 with output signals. In addition, a plurality of actuators, including the throttle valve 20 and the fuel injection valve 38 described earlier, are connected to the ECU 50. Based on the outputs provided by those sensors, the ECU 50 can detect the engine revolution speed NE, an engine load (a throttle opening or engine torque), and the like, thereby being able to drive the fuel injection valve 38 and the like.

### [Adjusting method of the engine of the first embodiment]

The diesel engine 10 of the first embodiment is characterized in the following point. Specifically, the diesel engine 10 changes the sound pressure of the engine noise in a natural form that matches with changes in engine operating conditions such that an occupant of a vehicle does not feel that the engine noise is uncomfortable. More specifically, the diesel engine 10 according to the first embodiment gradually increases the sound pressure of the engine noise so that the occupant of the vehicle does not feel that the engine noise is uncomfortable during a phase of mild acceleration in which both the engine revolution speed NE and the output torque increase only at a mild pace.

Noise produced by the diesel engine 10 is a combination of a mechanical noise, a combustion noise of a mixture gas, a combustion vibration generated in an engine main body, and the like. The engine noise does not simply increase in direct proportion to the engine revolution speed NE.
According to an ordinary control method that does not take into consideration the sound pressure level of noise, the sound pressure of the engine noise generally exhibits an irregular pattern of changes relative to changes in the operating condition during mild acceleration. Because of this irregularity, the occupant of the vehicle tends to feel that the noise is uncomfortable.

To prevent such a problem as that described in the foregoing, the first embodiment adopts the following method for adjusting specific details of fuel injection control of the diesel engine 10. Specifically, an index for a sound pressure distribution to be achieved in the diesel engine 10 is first prepared with the engine revolution speed NE and the engine load used as parameters (index preparation step). To realize the sound pressure distribution according to the index, control parameters having correlation with the sound pressure are adjusted with respect to a combination of the engine revolution speed NE and the engine load (adjustment step). The specific details of the fuel injection control, in which the results of the adaptation are incorporated, are then installed in the ECU 50 (installation step).

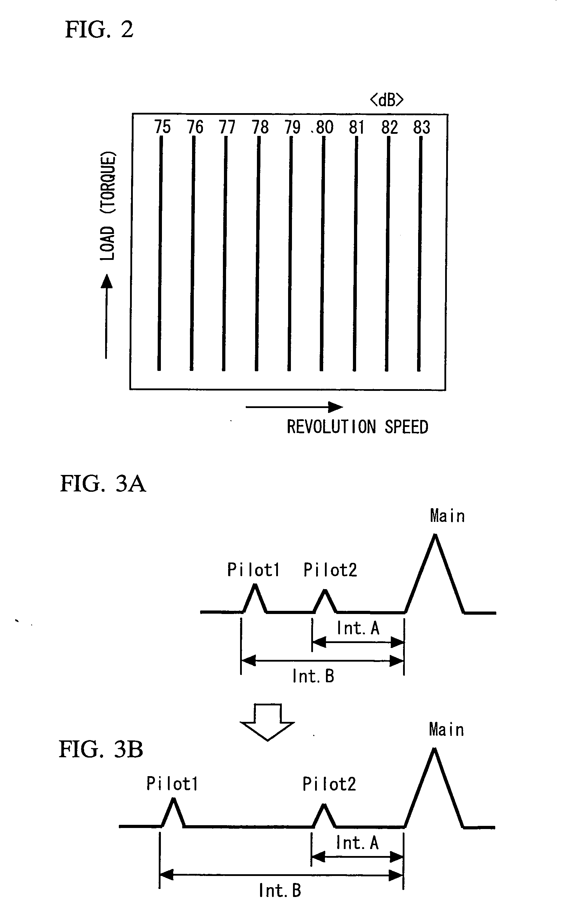

FIG. 2 is a diagram showing a typical index of the sound pressure distribution used in the first embodiment. Referring to FIG. 2, a distribution, which represents constant-sound-pressure lines placed regularly on Cartesian coordinates having the engine revolution speed NE and the engine load defined as variables, is used as the index. More specifically, the distribution used as the index is a plurality of constant-sound-pressure lines, whose adjacent lines have a constant-sound-pressure difference, arranged at equal intervals in the direction of the engine revolution speed NE. If such an index can be faithfully reproduced, the noise of the diesel engine 10 exhibits a constant sound pressure at all times with respect to the same engine revolution speed NE regardless of the engine load. Further, the sound pressure varies substantially linearly relative to the engine revolution speed NE for the same engine load.

An adjustment technique achieving the index shown in FIG. 2 will be next described.

FIGS. 3A and 3B show waveforms for explaining specific details of a multi-pilot injection executed by the diesel engine 10. More specifically, each of FIGS. 3A and 3B is a schematic diagram showing how the fuel injection valve 38 disposed in each of the cylinders of the diesel engine 10 executes fuel injection for each cycle.

As shown in FIGS. 3A and 3B, in the multi-pilot injection, the pilot injection is executed a plurality of times (twice in this case) prior to the main injection. A first pilot injection is intended for enhancing ignitability of the fuel, by mainly forming a positive source for kindling inside the combustion chamber. A second pilot injection is intended for preventing an ignition lag from occurring by letting mild flame propagation to occur in the combustion chamber. The execution of these pilot injection sequences prior to the main injection yields an effect of a reduction in the amount of smoke contained in the exhaust gas and the like.

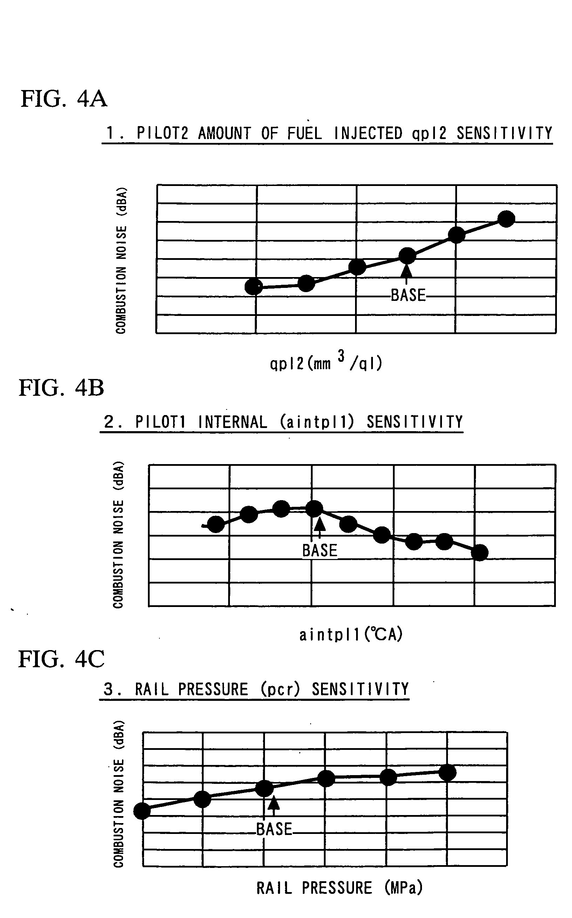

FIGS. 4A to 4C are diagrams showing relations between control parameters to be set in conjunction with the execution of the multi-pilot injection and the combustion noise. More specifically, FIG. 4A shows changes in the combustion noise occurring when an amount of fuel qp12 injected in the second pilot injection is varied with the amount of fuel injected in the first pilot injection and the amount of fuel injected in the main injection kept constant. FIG. 4A tells that reducing the amount of fuel qp12 injected in the second pilot injection can reduce the combustion noise in the diesel engine 10.

FIG. 4B shows changes in the combustion noise occurring when a first pilot injection timing aintpll (interval between the first pilot injection and the main injection: Int. B shown in FIG. 3) with the second pilot injection timing and the main injection timing fixed. The results shown in FIG. 4B indicate that the longer the interval Int. B between the first pilot injection and the main injection, the more the noise of the diesel engine 10 is reduced.

FIG. 4C shows a relation between a rail pressure pcr, i.e., the pressure of the fuel supplied to the fuel injection valve 38 and the combustion noise. The results shown in FIG. 4C indicate that the higher the rail pressure pcr, the greater the combustion noise.

As explained in the foregoing, the control parameters to be set in conjunction with the execution of the multi-pilot injection include ones that have a correlation with the combustion noise, that is, the sound pressure of the noise produced by the diesel engine 10. More specifically, the following parameters, in addition to the three control parameters cited above, have a correlation with the combustion noise. The parameters specifically include: an interval Int. A between the second pilot injection and the main injection; the amount of fuel injected by the first pilot injection; and proportions among the amounts of fuel injected in the first pilot injection, the second pilot injection, and the main injection. It is therefore possible, by adjusting these control parameters, to increase or decrease the sound pressure of the noise, while ensuring desired torque, in any given engine revolution speed NE.

FIGS. 3A and 3B represent examples of adjustment of the control parameters. An example is indicated here, in which a greater sound pressure for the index is firstly produced by the fuel injection according to the control parameters shown in FIG. 3A, then, Int. B is extended as shown in FIG. 3B to decrease the sound pressure, thereby conforming to the index.

### [Effect of the adjusting method of the first embodiment]

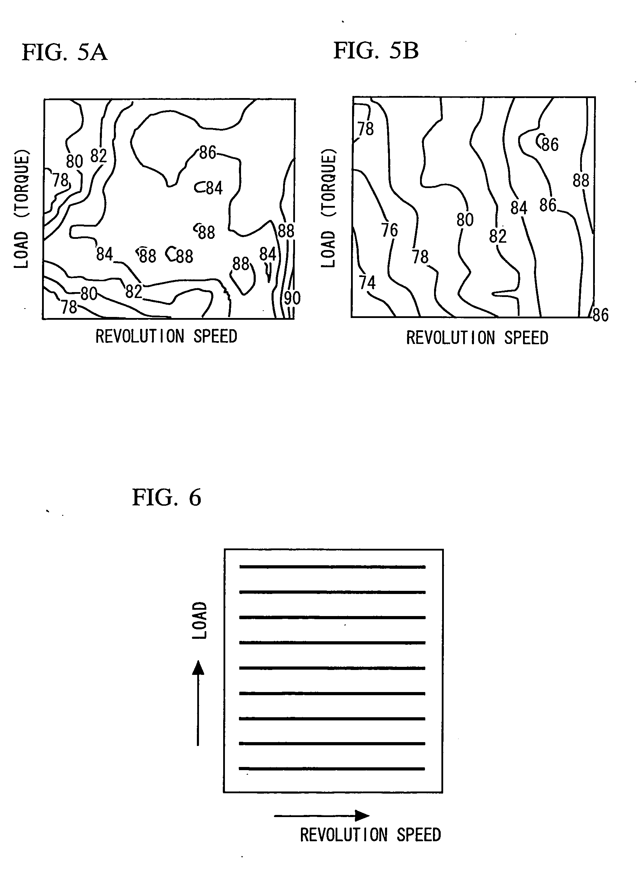

FIG. 5A shows a sound pressure distribution of the noise produced by the diesel engine 10 when the control parameters are determined with no consideration given to the sound pressure. FIG. 5B, on the other hand, shows a sound pressure distribution when the control parameters are subjected to the aforementioned adjustments within a range permissible in terms of emission characteristics.

In the process of developing the diesel engine 10 according to the first embodiment, specific control parameters are subjected to the aforementioned adjustments with the sound pressure distribution shown in FIG. 2 as the index.
The control parameters specifically include: the intervals Int. B and Int. A between the pilot injections and the main injection; the proportions among the amounts of fuel injected in the pilot injection sequences and the main injection; and the rail pressure pcr at fuel injection. The ECU 50 detects the engine revolution speed NE and the engine load while a vehicle is running. Based on these detected values, the ECU 50 sets the control parameters. The diesel engine 10 of the embodiment therefore exhibits a sound pressure distribution as shown in FIG. 5B on the Cartesian coordinates having the engine revolution speed and the engine load defined as variables.

If the diesel engine 10 exhibits a sound pressure distribution as shown in FIG. 5A, a situation arises in which the sound pressure of the noise increases and decreases irregularly during mild acceleration, that is, during acceleration in which both the engine revolution speed NE and the load torque increase at a mild pace. On the other hand, according to the sound pressure distribution shown in FIG. 5B, constant-sound-pressure lines placed regularly on Cartesian coordinates having the engine revolution speed and the engine load defined as variables. The sound pressure of the noise of the present embodiment, therefore, is substantially constant for the same engine revolution speed regardless of the engine load.
More specifically, the sound pressure of the noise increases regularly at a substantially constant rate during the mild acceleration. The diesel engine 10 according to the first embodiment, therefore, is capable of providing a comfortable ride for the occupant of the vehicle.

### [Other features and modified embodiments]

In the diesel engine 10 according to the first embodiment, it is not always necessary to carry out the aforementioned adjustment processing throughout an entire operating range. Specifically, whether or not the occupant of the vehicle feels that the noise is uncomfortable matters most in the mild acceleration range, in which the sound pressure of the noise remains relatively low. Whether or not the occupant of the vehicle feels that the noise is uncomfortable does not matter much in a high load, high speed range, in which the sound pressure of the noise is sufficiently high. Large numbers of hours are required, on the other hand, for adjustment processing that realizes the desired sound pressure distribution. Such adjustment may, therefore, be omitted in the high load range and the high speed range.

According to the first embodiment as described in the foregoing, the distribution that maintains the same sound pressure for the same revolution speed is used as the index, as shown in FIG. 2. The index that may be used in the present invention is not limited to the sound pressure distribution such as this one. That is, the sound pressure of the noise has only to exhibit a regular change, or a desired change, with respect to the changes in the operating condition of the internal combustion engine (changes in the engine revolution speed and the engine load). The index used in the present invention has only to exhibit any given regularity.

FIG. 6 shows another example of sound distribution that can be used as the index. The index shown in FIG. 6 is prepared such that a plurality of constant-sound-pressure lines, whose adjacent lines have a constant-sound-pressure difference, are arranged at equal intervals in the direction of the engine load on Cartesian coordinates having the engine revolution speed NE and the engine load defined as variables. If such an index as this one is faithfully reproduced, the noise of the diesel engine 10 exhibits a constant sound pressure at all times with respect to the same engine load regardless of the engine revolution speed NE. Further, the sound pressure is varied substantially linearly relative to the engine load for the same engine revolution speed NE. According to the sound pressure distribution such as this one, the sound pressure increases gradually during mild acceleration in the same manner as when the sound pressure distribution as shown in FIG. 2 is reproduced. A comfortable ride can therefore be provided for the occupant of the vehicle.

Further, in the first embodiment of the present invention as described in the foregoing, the internal combustion engine is limited to the diesel engine. The present invention is not, however, limited to the diesel engine. Specifically, the technique for adjusting the control parameters in consideration of the sound pressure distribution of the noise may also be applied to a gasoline engine.

The aspects and major benefits of the present invention described above are summarized as follows:

A first aspect of the present invention accords with an adjusting method for an internal combustion engine. The method includes the steps of: preparing an index (FIG. 2, FIG. 6) for a sound pressure distribution to be realized in the internal combustion engine (10) with an engine revolution speed and an engine load used as variables; adjusting a control parameter (qpl2, aintpl1, pcr, Int.A, Int.B) of the internal combustion engine (10) with respect to a combination of the engine revolution speed (NE) and the engine load so as to realize the sound pressure distribution in line with the index (FIG. 2, FIG. 6); and installing a result of the adjusting step into control of the internal combustion engine (10).

A second aspect of the present invention accords with the adjusting method according to the first aspect, wherein the index (FIG. 2, FIG. 6) of the sound pressure distribution represents constant-sound-pressure lines placed regularly on Cartesian coordinates having the engine revolution speed and the engine load defined as variables.

A third aspect of the present invention accords with the adjusting method according with the second aspect, wherein the index (FIG. 2, FIG. 6) of the sound pressure distribution represents a plurality of constant-sound-pressure lines, each having a sound pressure different by a fixed value from that of the adjacent line, placed at substantially equal intervals on the Cartesian coordinates.

A fourth aspect of the present invention accords with the second aspect or the third aspect, wherein the index (FIG. 2) of the sound pressure distribution makes the sound pressure substantially constant for the same engine revolution speed regardless of the engine load and varies the sound pressure substantially linearly relative to the engine revolution speed for the same engine load.

A fifth aspect of the present invention accords with the second aspect or the third aspect, wherein the index (FIG. 6) of the sound pressure distribution makes the sound pressure substantially constant for the same engine load regardless of the engine revolution speed and varies the sound pressure substantially linearly relative to the engine load for the same engine revolution speed.

A sixth aspect of the present invention accords with any one of the first to fifth aspect, wherein the internal combustion engine (10) includes a multi-pilot injection function that executes a plurality of pilot injection sequences prior to a main injection sequence; and wherein the control parameter includes at least one of proportions among amounts of fuel injected in each of the plurality of pilot injection sequences and the main injection sequence, an interval (Int.A, Int.B) between each of the pilot injection sequences and the main injection sequence, and a fuel injection pressure.

A seventh aspect of the present invention accords with an internal combustion engine. The internal combustion engine includes revolution speed detecting means (52) for detecting an engine revolution speed; load detecting means (50) for detecting an engine load; and parameter control means (50) for controlling a control parameter (qpl2, aintpl1, pcr, Int.A, Int.B) having an influence on a magnitude of noise produced by the internal combustion engine (10) based on the engine revolution speed and the engine load; wherein the parameter control means (50) controls the control parameter (qpl2, aintpl1, pcr, Int.A, Int.B) so that a sound pressure distribution may be formed such that constant-sound-pressure lines are arranged regularly on Cartesian coordinates having the engine revolution speed and the engine load defined as variables (FIG. 2, FIG. 6).

An eighth aspect of the present invention accords with the seventh aspect, wherein the sound pressure distribution (FIG. 2, FIG. 6) is such that a plurality of constant-sound-pressure lines, each having a sound pressure different by a fixed value from that of the adjacent line, placed at substantially equal intervals on the Cartesian coordinates.

A ninth aspect of the present invention accords with the seventh or eighth aspect, wherein the sound pressure distribution (FIG. 2) is a distribution that exhibits a substantially constant sound pressure for the same engine revolution speed regardless of the engine load and that varies the sound pressure substantially linearly relative to the engine revolution speed for the same engine load.

A tenth aspect of the present invention accords with the seventh or eighth aspect, wherein the sound pressure distribution (FIG. 6) is a distribution that exhibits a substantially constant sound pressure for the same engine load regardless of the engine revolution speed and that varies the sound pressure substantially linearly relative to the engine load for the same engine revolution speed.

An eleventh aspect of the present invention accords with any one of the seventh to tenth aspect, wherein the internal combustion engine (10) includes a multi-pilot injection function that executes a plurality of pilot injection sequences prior to a main injection sequence; and wherein the control parameter includes at least one of proportions among amounts of fuel injected in each of the plurality of pilot injection sequences and the main injection sequence, an interval (Int.A, Int.B) between each of the pilot injection sequences and the main injection sequence, and a fuel injection pressure.

According to the first aspect of the present invention, the control parameters of the internal combustion engine can be adjusted so as to realize the sound pressure distribution previously prepared with changes in the engine revolution speed and the engine load. The invention thus realizes the internal combustion engine capable of varying the sound pressure of the noise in a desired form relative to changes in the operating conditions.

According to the second aspect of the present invention, the internal combustion engine can be adjusted with the sound pressure distribution, which represents constant-sound-pressure lines placed regularly on Cartesian coordinates having the engine revolution speed and the engine load defined as variables, used as an index. The invention thus realizes the internal combustion engine, in which the sound pressure of the noise increases or decreases regularly relative to changes in the operating conditions.

According to the third aspect of the present invention, the internal combustion engine can be adjusted with the sound pressure distribution, which represents constant-sound-pressure lines placed at equal intervals on Cartesian coordinates having the engine revolution speed and the engine load defined as variables, used as an index. The invention thus realizes the internal combustion engine, in which the sound pressure of the noise increases or decreases naturally relative to changes in the operating conditions.

According to the fourth aspect of the present invention, the internal combustion engine can be adjusted with the sound pressure distribution as specified in the following used as an index. Specifically, in this sound pressure distribution, the sound pressure is made substantially constant for the same engine revolution speed regardless of the engine load and the sound pressure is varied substantially linearly relative to the engine revolution speed for the same engine load. The invention thus realizes the internal combustion engine, in which the sound pressure of the noise increases naturally especially in mild acceleration.

According to the fifth aspect of the present invention, the internal combustion engine can be adjusted with the sound pressure distribution as specified in the following used as an index. Specifically, in this sound pressure distribution, the sound pressure is made substantially constant for the same engine load regardless of the engine revolution speed and the sound pressure is varied substantially linearly relative to the engine load for the same engine revolution speed. The invention thus realizes the internal combustion engine, in which the sound pressure of the noise increases naturally especially in mild acceleration.

According to the sixth aspect of the present invention, a desired sound pressure distribution can be realized by adjusting proportions among amounts of fuel injected through the plurality of pilot injection sequences and the main injection sequence, the injection interval between each of the pilot injection sequence and the main injection sequence, or the fuel injection pressure.

According to the seventh aspect of the present invention, the internal combustion engine can be realized which produces noise in the sound pressure distribution, which represents constant-sound-pressure lines placed regularly on Cartesian coordinates having the engine revolution speed and the engine load defined as variables. The invention thus realizes the internal combustion engine, in which the sound pressure of the noise increases or decreases regularly relative to changes in the operating conditions.

According to the eighth aspect of the present invention, the internal combustion engine can be realized which produces noise in the sound pressure distribution, which represents constant-sound-pressure lines placed at equal intervals on Cartesian coordinates having the engine revolution speed and the engine load defined as variables. The invention thus realizes the internal combustion engine, in which the sound pressure of the noise increases or decreases naturally relative to changes in the operating conditions.

According to the ninth aspect of the present invention, the internal combustion engine as specified in the following can be realized. Specifically, the engine produces noise with the substantially constant sound pressure for the same engine revolution speed regardless of the engine load. Further, the engine varies the sound pressure of the noise substantially linearly relative to the engine revolution speed for the same engine load. The invention thus realizes the internal combustion engine, in which the sound pressure of noise increases naturally especially in mild acceleration.

According to the tenth aspect of the present invention, the internal combustion engine as specified in the following can be realized. Specifically, the engine produces noise with the substantially constant sound pressure for the same engine load regardless of the engine revolution speed. Further, the engine varies the sound pressure of noise substantially linearly relative to the engine load for the same engine revolution speed. The invention thus realizes the internal combustion engine, in which the sound pressure of the noise increases naturally especially in mild acceleration.

According to the eleventh aspect of the present invention, the internal combustion engine that realizes a desired sound pressure distribution can be realized by controlling at least any one of the following: proportions of amounts of fuel injected through each of the plurality of pilot injection sequences and the main injection sequence, the injection interval between each of the pilot injection sequences and the main injection sequence, and the fuel injection pressure.

Further, the present invention is not limited to these embodiments, but variations and modifications may be made without departing from the scope of the present invention.

## Claims

1. An adjusting method for an internal combustion engine, comprising the steps of:
preparing an index (FIG. 2, FIG. 6) for a sound pressure distribution to be realized in the internal combustion engine (10) with an engine revolution speed and an engine load used as variables;
adjusting a control parameter (qpl2, aintpl1, pcr, Int.A, Int.B) of the internal combustion engine (10) with respect to a combination of the engine revolution speed (NE) and the engine load so as to realize the sound pressure distribution in line with said index (FIG. 2, FIG. 6); and
installing a result of said adjusting step into control of the internal combustion engine (10).

2. The adjusting method for an internal combustion engine according to claim 1,
wherein said index (FIG. 2, FIG. 6) of the sound pressure distribution represents constant-sound-pressure lines placed regularly on Cartesian coordinates having the engine revolution speed and the engine load defined as variables.

3. The adjusting method for an internal combustion engine according to claim 2,
wherein said index (FIG. 2, FIG. 6) of the sound pressure distribution represents a plurality of constant-sound-pressure lines, each having a sound pressure different by a fixed value from that of the adjacent line, placed at substantially equal intervals on said Cartesian coordinates.

4. The adjusting method for an internal combustion engine according to claim 2 or 3,
wherein said index (FIG. 2) of the sound pressure distribution makes the sound pressure substantially constant for the same engine revolution speed regardless of the engine load and varies the sound pressure substantially linearly relative to the engine revolution speed for the same engine load.

5. The adjusting method for an internal combustion engine according to claim 2 or 3,
wherein said index (FIG. 6) of the sound pressure distribution makes the sound pressure substantially constant for the same engine load regardless of the engine revolution speed and varies the sound pressure substantially linearly relative to the engine load for the same engine revolution speed.

6. The control method for an internal combustion engine according to any one of claims 1 to 5,
wherein said internal combustion engine (10) includes a multi-pilot injection function that executes a plurality of pilot injection sequences prior to a main injection sequence; and
wherein said control parameter includes at least one of proportions among amounts of fuel injected in each of said plurality of pilot injection sequences and said main injection sequence, an interval (Int.A, Int.B) between each of the pilot injection sequences and the main injection sequence, and a fuel injection pressure.

7. An internal combustion engine, comprising:
revolution speed detecting means (52) for detecting an engine revolution speed;
load detecting means (50) for detecting an engine load; and
parameter control means (50) for controlling a control parameter (qpl2, aintpl1, pcr, Int.A, Int.B) having an influence on a magnitude of noise produced by the internal combustion engine (10) based on the engine revolution speed and the engine load;
wherein said parameter control means (50) controls said control parameter (qpl2, aintpl1, pcr, Int.A, Int.B) so that a sound pressure distribution may be formed such that constant-sound-pressure lines are arranged regularly on Cartesian coordinates having the engine revolution speed and the engine load defined as variables (FIG. 2, FIG. 6).

8. The internal combustion engine according to claim 7,
wherein said sound pressure distribution (FIG. 2, FIG. 6) is such that a plurality of constant-sound-pressure lines, each having a sound pressure different by a fixed value from that of the adjacent line, placed at substantially equal intervals on said Cartesian coordinates.

9. The internal combustion engine according to claim 7 or 8,
wherein said sound pressure distribution (FIG. 2) is a distribution that exhibits a substantially constant sound pressure for the same engine revolution speed regardless of the engine load and that varies the sound pressure substantially linearly relative to the engine revolution speed for the same engine load.

10. The internal combustion engine according to claim 7 or 8,
wherein said sound pressure distribution (FIG. 6) is a distribution that exhibits a substantially constant sound pressure for the same engine load regardless of the engine revolution speed and that varies the sound pressure substantially linearly relative to the engine load for the same engine revolution speed.

11. The internal combustion engine according to any one of claims 7 to 10,
wherein said internal combustion engine (10) includes a multi-pilot injection function that executes a plurality of pilot injection sequences prior to a main injection sequence; and
wherein said control parameter includes at least one of proportions among amounts of fuel injected in each of said plurality of pilot injection sequences and said main injection sequence, an interval (Int.A, Int.B) between each of the pilot injection sequences and the main injection sequence, and a fuel injection pressure.
